# EUROPEAN PATENT APPLICATION

(11) **EP 1 715 591 A1**
(43) Date of publication of application: **25.10.2006**
(21) Application number: 05709903.8
(22) Date of filing: 08.02.2005
(51) Int. Cl.: H04B 1/16

(54) **FM RECEIVER**

(30) Priority: 12.02.2004 JP 2004035646
(71) Applicant: KABUSHIKI KAISHA TOYOTA JIDOSHOKKI, Kariya-shi, Aichi 448-8671 (JP); Niigata Seimitsu Co., Ltd., Jouetsu-shi, Niigata 943-0834 (JP)
(72) Inventor: KOIKE, Tsuyoshi, c/o K.K. TOYOTA JIDOSHOKKI, Kariya-shi, Aichi 448-8671 (JP); MIYAGI, Hiroshi, c/o NIIGATA SEIMITSU CO., LTD., Joetsu-shi, Niigata 943-0834 (JP)
(74) Representative: TBK-Patent
(86) International application number: PCT/JP2005/001851
(87) International publication number: WO 2005/078942

(57) **Abstract**

An FM receiver which can be used by being switched between stereophonic and monophonic, and comprises detecting unit for detecting a received signal, two routes over which a detected signal is transmitted to an output buffer, and a switching unit for selecting either one of the two routes. The two routes consist of a route passing through a stereophonic demodulator unit and a route bypassing the stereophonic demodulator unit; and the switching unit selects either one of the two routes based on a control signal indicating the selection of either one of stereophonic and monophonic, and, when the route bypassing the stereophonic demodulator unit is selected, turns off power supply to the stereophonic demodulator unit based on the above control signal.

## Description

### Field of the Invention

The present invention relates to an FM receiver in which electric power consumption can be reduced.

### Background of the Invention

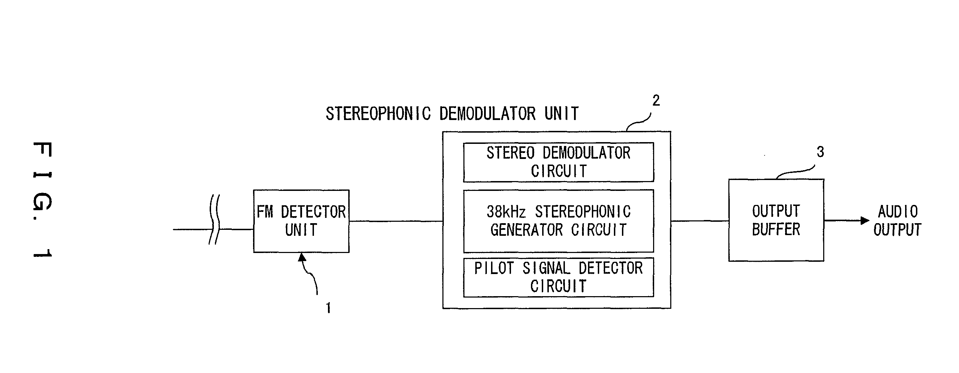

Conventionally, in an FM receiver as shown in Fig. 1, FM radio waves are received by an antenna unit (not shown), prescribed detection processes are conducted in an FM detector unit 51, and stereophonic demodulation processes are conducted in a stereophonic demodulator unit 52 comprising a stereophonic demodulator circuit, a 38kHz stereophonic generator circuit and a pilot signal detector circuit. Then, a signal which has been subject to the stereophonic demodulation is output as audio information via an output buffer 53.

The FM receiver as above is used by being switched between stereophonic and monophonic. However, even when monophonic output is produced, signals are transmitted through the stereophonic demodulator unit, accordingly, electric power is consumed by the stereophonic demodulator unit in vain.

As for a method of efficiently reducing electric power consumption, a receiver is disclosed in the Patent Document 1 below, for example, in which receiving operations are continued for a prescribed time period from a reception start time to a reception end time when a reception start time of signals is known in advance.

In this receiver, a power source is turned on around the above reception start time, signals are generated which only activate necessary units in accordance with respective stages of reception operations until the reception is completed, and electric power can be supplied to units which need electric power in respective stages based on the above signals, so that electric power consumption is reduced.

Patent Document 1: Japanese Patent Application Publication No. 10-70500 "Receiver"

However, the technique in the above Patent Document 1 can only be applied when information such as a reception start time, a reception end time or the like is known in advance, and it is impossible to reduce electric power consumption by directly applying this technique to an FM receiver in which switching can be conducted between stereophonic and monophonic.

### Summary of the Invention

It is an object of the present invention to provide an FM receiver which can be used by being switched between stereophonic and monophonic, in which electric power consumption can be reduced.

An FM receiver according to an aspect of the present invention is an FM receiver which can be used by being switched between stereophonic and monophonic, comprising detecting unit for detecting a received signal, switching unit for selecting either one of a route via a stereophonic demodulator unit and a route bypassing the stereophonic demodulator unit upon transmitting the detected signal to an output buffer, based on a control signal indicating the selection of either one of the stereophonic and the monophonic, in which electric power supply to the stereophonic demodulator unit is turned off based on the control signal when the route bypassing the stereophonic demodulator unit is selected.

Based on the above, when the monophonic mode is selected, the route bypassing the stereophonic demodulator unit is selected, and also, electric power supply to the stereophonic demodulator unit which is not used is turned off, accordingly, electric power consumption is reduced.

The above switching between the stereophonic and monophonic can be conducted in accordance with an external switching instruction provided by a user.

Also, the above comparison between stereophonic and monophonic can be conducted by further comprising comparison unit for comparing a strength of the received signal with a reference value, and the switching unit can select the route via the stereophonic demodulator unit when the received signal is higher than the reference value, and/or select the route bypassing the stereophonic demodulator unit when the received signal is equal to or lower than the reference value, based on an output signal of the comparison unit.

In both of the above cases, the stereophonic demodulator unit turns off electric power supply to the stereophonic demodulator unit when the route via the stereophonic demodulator unit is selected, based on the switching instruction provided by the user or the output signal of the comparison unit.

Also, when the switches are arranged after a branch of the route via the stereophonic demodulator unit and the route bypassing the stereophonic demodulator unit and close to the branch, and also, are arranged before a joining point of the route via the stereophonic demodulator unit and the route bypassing the stereophonic demodulator unit and close to the joining point, the number of circuit portions (sections) over which unnecessary propagation of signals occurs can be reduced so that factors deteriorating the stability of operation of the circuit can be reduced.

According to the FM receiver of the present invention, when a monophonic mode is selected, the route bypassing the stereophonic demodulator unit is selected and also, electric power supply to the stereophonic demodulator unit which is not used is turned off so that electric power consumption is reduced.

Also, when the switches are arranged after a branch into the route via the stereophonic demodulator unit and the route bypassing the stereophonic demodulator unit and close to the branch, and also, are arranged before a joining point of the route via the stereophonic demodulator unit and the route bypassing the stereophonic demodulator unit and close to the joining point, the number of circuit portions (sections) over which unnecessary propagation of signals occurs can be reduced so that factors deteriorating the stability of operation of the circuit can be reduced.

Also, in the FM receiver according to the present invention, because the stereophonic demodulator unit is bypassed by selecting routes between the case of outputting monophonic audio and the case of outputting stereophonic audio, accordingly, deterioration in signals when the monophonic output is desired is reduced so that audio quality can be improved, compared to the case where the monophonic audio and the stereophonic audio are output via the same route, i.e., the case of a conventional example without the route selection.

### Brief Description of Drawings

Fig. 1 is a block diagram for showing an example of a configuration of a conventional FM receiver;
Fig. 2 is a block diagram for showing a configuration of an FM receiver according to the present embodiment;
Fig. 3 is a block diagram for showing an alternative of the FM receiver according to the present embodiment;
Fig. 4A shows a specific circuit configuration of one of switches 13b and 17b in Fig. 3;
Fig. 4B shows a specific circuit configuration of one of switches 13a and 17a in Fig. 3;
Fig. 5 is a first diagram for showing a circuit configuration of a principal unit related to electric power supply to a stereophonic demodulator unit;
Fig. 6 is a second diagram for showing a circuit configuration of a principal unit related to electric power supply to the stereophonic demodulator unit;
Fig. 7 is a block diagram for showing a second alternative of the FM receiver according to the present embodiment;
Fig. 8A is a diagram for explaining positions at which switches are arranged, and shows the case where the switches are arranged only at a point close to a branch on the route via the stereophonic demodulator unit and at a point close to the branch on the route bypassing the stereophonic demodulator unit; and
Fig. 8B is a diagram for explaining positions at which switches are arranged, and shows the case where the switches are arranged at points respectively close to both of the branch and the joining point on the route via the stereophonic demodulator unit and the route bypassing the stereophonic demodulator unit.

### Detailed Description of the Preferred Embodiments

Hereinafter, embodiments of the present invention will be explained in detail by referring to the drawings.

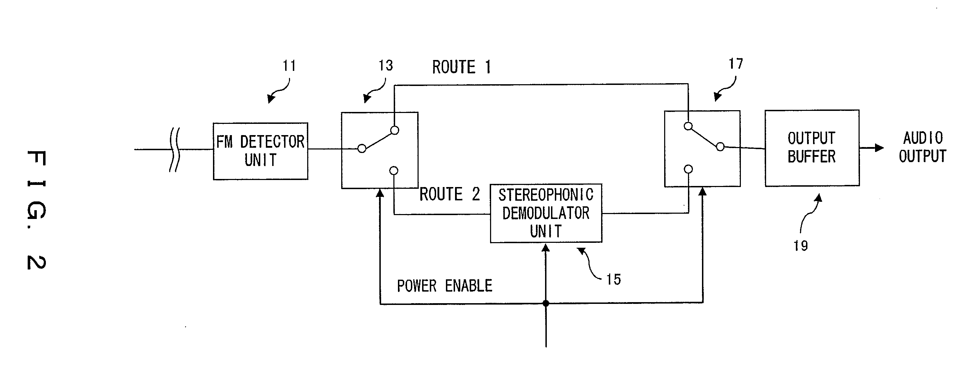

Fig. 2 is a block diagram for showing a configuration of an FM receiver according to the present embodiment. Additionally, at least some of the components in Fig. 2, for example switches 13 and 17, a stereophonic demodulator unit 15, a route 1 and a route 2, are mounted on a semiconductor integrated circuit substrate which is produced by a CMOS process that can form a P-channel MOS transistor and an N-channel MOS transistor.

In Fig. 2, the FM receiver according to the present embodiment comprises an FM detector unit 11, the switches 13 and 17, the stereophonic demodulator unit 15 and an output buffer 19.

Hereinafter, operations of the FM receiver will be explained.

First, FM radio waves are received by an antenna (not shown), and a detection process is conducted by an FM detector unit 11. A switch 13 provided at a later stage of the FM detector unit 11 selectively switches between a route 1 and a route 2 in the figure based on an instruction of a user of the FM receiver such as pressing of buttons on a surface of the receiver. The above route 2 is a route via the stereophonic demodulator unit 15, and the route 1 is a route which bypasses the stereophonic demodulator unit 15.

Audio which is to be output via the output buffer 19 based on the above instruction by the user is switched from stereophonic output to monophonic output, or conversely, from monophonic output to stereophonic output. This instruction of the user is input to the switch 13, the stereophonic demodulator unit 15 and the switch 17 as a power enable signal specifying whether the stereophonic output is conducted or the monophonic output is conducted.

When a user does not need the stereophonic output such as in a case where it is desired that the receiver is used for a long time based on electric power supplied by a battery, or reception conditions are bad, the user provides an instruction to switch to a monophonic mode, and a route of a detected signal is switched from a route 2 via the stereophonic demodulator unit 15 to a route 1 bypassing the stereophonic demodulator unit 15 in accordance with a power enable signal specifying contents of the instruction. When the route bypassing the stereophonic demodulator unit 15 is selected, electric power supply to the stereophonic modulator unit 15 is turned off in accordance with the above power enable signal so that reduced electric power consumption is realized.

Additionally, when the user provides an instruction to switch to a stereophonic mode, the route of the detected signal is switched from the route 1 bypassing the stereophonic demodulator unit 15 to the route 2 via the stereophonic demodulator unit 15 in accordance with a power enable signal specifying contents of the instruction. When the route via the stereophonic demodulator unit 15 is selected, electric power supply to the stereophonic modulator unit 15 is turned on in accordance with the above power enable signal.

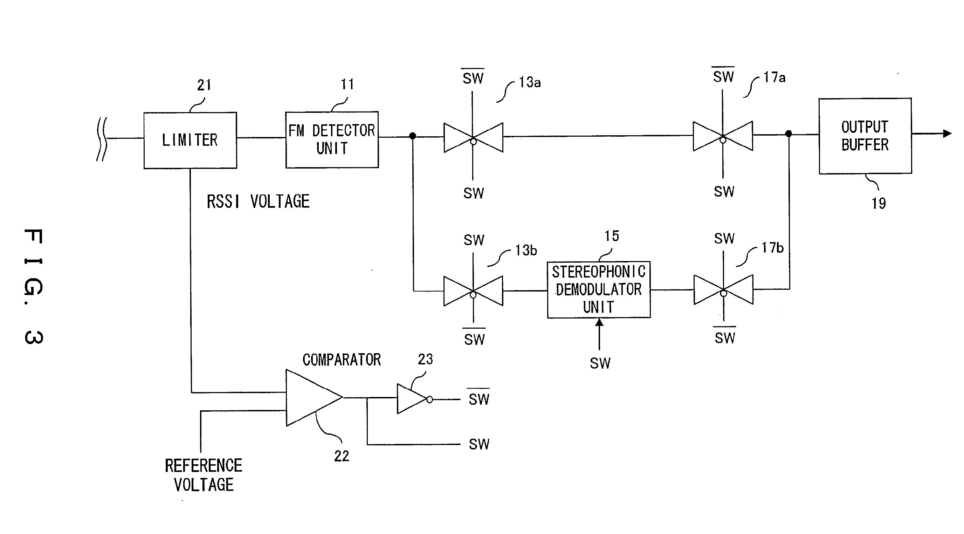

Fig. 3 is a block diagram for showing an alternative of the FM receiver according to the present embodiment.

In this alternative embodiment, the switching which has been conducted based on the instruction provided by the user in the first embodiment is automatically conducted based on the strength of a received signal.

In Fig. 3, in the FM receiver, information specifying reception strength of the received signal such as, for example, an RSSI voltage, is output by a limiter 21, and the output information is input to one input of a 2-input comparator 22. To the other input of the comparator 22, a reference value (reference voltage) is input, and the above RSSI voltage and the reference voltage are compared by the comparator 22. A comparison result signal SW specifying the comparison result is output by the comparator 22, and the comparison result signal SW and an inverted signal thereof are input to switches 13a, 13b, 17a, 17b and the stereophonic demodulator unit 15 via an inverter 23 provided at a later stage to the comparator 22. Additionally, in the present alternative embodiment, when the above value specifying the reception strength is lower than the reference value, switching is conducted to a monophonic mode.

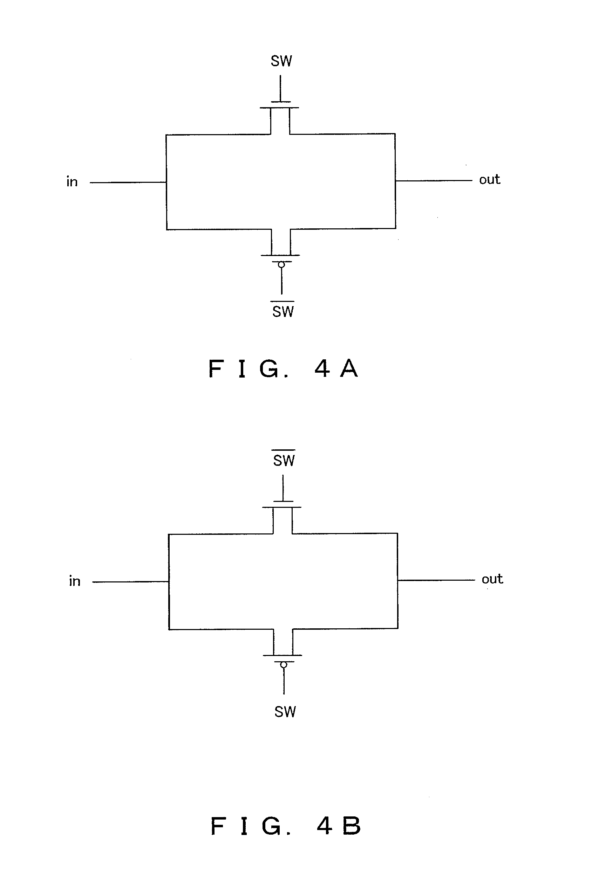

Fig. 4A and Fig. 4B are circuit diagrams for showing specific configurations of the switches. Fig. 4A shows the following switches 13b and 17b and Fig. 4B shows the following switches 13a and 17a respectively.

Fig. 4A specifically shows circuit configurations of the switches 13b and 17b. The above switches each comprise two control terminals for inputting the comparison result signal SW and the inverted signal thereof. And, switching of whether or not a signal of an input (in) side is allowed to pass to an output (out) side is conducted in accordance with values input to the control terminals. Because the switches 13b and 17b are provided on a route via the stereophonic demodulator circuit, the configuration in the figure assumes the case in which the comparison result signal SW of the comparator 22 is set to "H" and accordingly, the inverted signal thereof is set to "L" when the reception strength is higher than the reference value. With the comparison result signal SW and the inverted signal thereof as above, the switches 13b and 17b in Fig. 3 are turned on (become continuous) and the switches 13a and 17a are turned off (become discontinuous), and the signal passes on the route via the stereophonic demodulator unit 15.

Fig. 4B specifically shows circuit configurations of the switches 13a and 17a. The above switches each comprise two control terminals for inputting the comparison result signal SW and the inverted signal thereof. And, switching of whether or not a signal on an input (in) side is allowed to pass to an output (out) side is conducted in accordance with values input to the control terminals. Because the switches 13a and 17a are provided on a route bypassing the stereophonic demodulator circuit, the configuration in the figure assumes the case in which the comparison result signal SW of the comparator 22 is set to "L" and accordingly, the inverted signal thereof is set to "H" when the reception strength is equal to or lower than the reference value. With the comparison result signal SW and the inverted signal thereof as above, the switches 13a and 17a in Fig. 3 are turned on (become continuous) and the switches 13b and 17b are turned off (become discontinuous), and the signal passes on the route bypassing the stereophonic demodulator unit 15.

Additionally, as the switches 13 and 17, semiconductor switching elements such as MOS transistors or the like, as shown in Fig. 4A or 4B can be employed, however, other types of switches such as mechanical switches for example can also be employed.

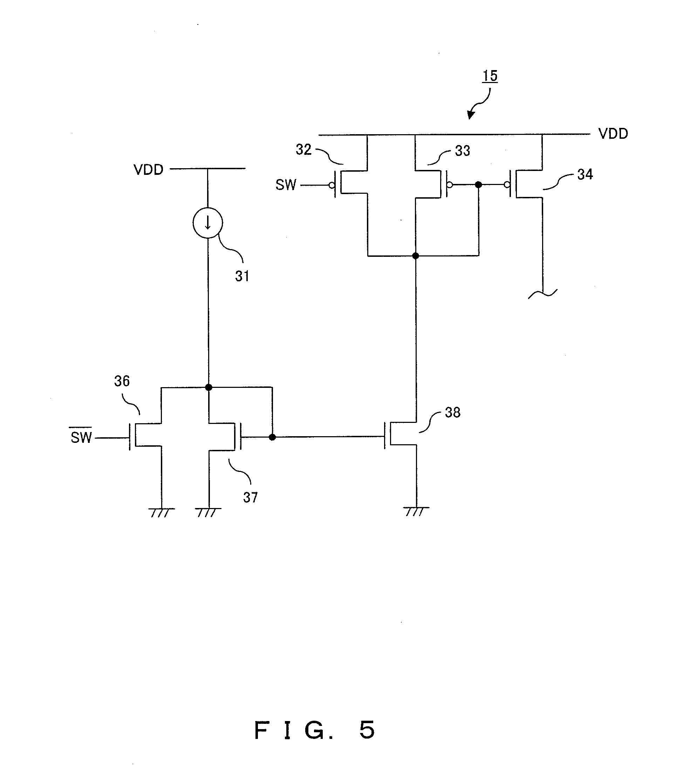

Fig. 5 is a first diagram for showing a circuit configuration of a principal unit related to electric power supply to the stereophonic demodulator unit.

In Fig. 5, the principal unit related to the electric power supply to the stereophonic demodulator unit comprises, together with a main power supply 31, a first transistor group consisting of transistors 32, 33 and 34, and a second transistor group consisting of transistors 36, 37 and 38. As shown, the transistors 32, 33 and 34 are P-channel transistors, and are provided on a first direct current electrical potential side (VDD side). The transistors 36, 37 and 38 are N-channel transistors, and are provided on a second direct current electrical potential side (ground side). Additionally, the comparison result signal SW and the inverted signal of the comparison result signal SW are applied respectively to a gate of the transistor 32 and a gate of the transistor 36.

Hereinafter, a control upon turning off electric power supply in the principal unit in the above configuration will be explained.

In Fig. 5, when the inverted signal of "H" of the comparison result signal SW is applied to the gate of the transistor 36 provided on the second direct current electrical potential side (ground side) in the case when the above comparison result signal SW is "L", the transistor 36 is turned ON (continuous) because the transistor 36 is an N-channel transistor, and referring to the above second direct current electrical potential, "L" is applied to the gate of the transistor 37, which is the other of the transistors forming a differential pair with the above transistor 36 and which is provided on the same second direct current electrical potential side and/or to the gate of the transistor 38 provided on the same second direct current electrical potential side. As a result, the transistor 37 and the transistor 38 are turned off (discontinuous).

Also, when a comparison result signal SW "L" is applied to a gate of the transistor 32 provided on the first direct current electrical potential side (VDDside), the transistor 32 is turned ON because the transistor 32 is a P-channel transistor, and referring to the above first direct current electrical potential, "H" is applied to the gate of the transistor 33, which is the other of the transistors forming a differential pair with the above transistor 32 and which is provided on the same first direct current electrical potential side and/or to a gate of the transistor 34 provided on the same first direct current electrical potential side. As a result, the transistor 33 and the transistor 34 are turned off (discontinuous). In the figure, the transistor 34 constitutes a first stage of a multistage transistor circuit for example, and by turning off this transistor 34, electric current is prevented from flowing through subsequent circuit portions so that electric power consumption can be reduced.

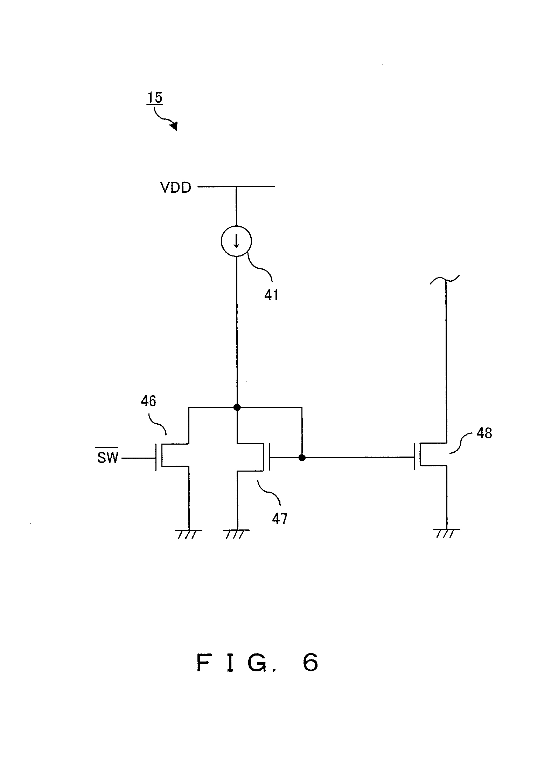

Additionally, in the stereophonic demodulator unit in Fig. 5, the switching regarding on and off of the electric power supply to the stereophonic demodulator unit is conducted by inputting both the comparison result signal SW and the inverted signal thereof. However, it is also possible to conduct switching regarding on and off of the electric power supply based on either one of the above signals. A configuration example of such a stereophonic demodulator unit is shown in Fig. 6.

In Fig. 6, when the inverted signal "H" of the comparison result signal SW is applied to a gate of the transistor 46 provided on the second direct current electrical potential side (ground side) in the case when the comparison result signal SW is "L", the transistor 46 is turned ON (continuous) because the transistor 46 is an N-channel transistor, and referring to the above second direct current electrical potential, "L" is applied to the gate of the transistor 47 which is the other of the transistors forming a differential pair with the above transistor 46 and which is provided on the same second direct current electrical potential side and/or to a gate of the transistor 48 provided on the same second direct current electrical potential side. As a result, the transistor 47 and the transistor 48 are turned off (discontinuous). In the figure, the transistor 48 constitutes a first stage of a multistage transistor circuit for example, and by turning off this transistor 48, electric current is prevented from flowing through subsequent circuit portions so that electric power consumption can be reduced.

The circuit configuration of the stereophonic demodulator units in Fig. 5 and Fig. 6 are examples. In these configurations, by providing signals to the upstream transistors constituting multiple stages (the transistors 32 and 36 in Fig. 5, the transistor 46 in Fig. 6), causing these transistors to be continuous, the transistor which is the other of the transistors forming each differential pair with the transistor (the transistors 33 and 37 in Fig. 5, the transistor 47 in Fig. 6) can be turned off.

As above, in the present embodiment, when the route bypassing the stereophonic demodulator unit is selected, electric power supply to the stereophonic demodulator unit is turned off, accordingly, electric power consumption can be reduced.

Additionally, as a configuration of the stereophonic demodulator unit, an arbitrary configuration that allows switching between ON and OFF of electric power supply by a control of the FM receiver according to the present invention can be employed besides those shown in Fig. 5 and Fig. 6.

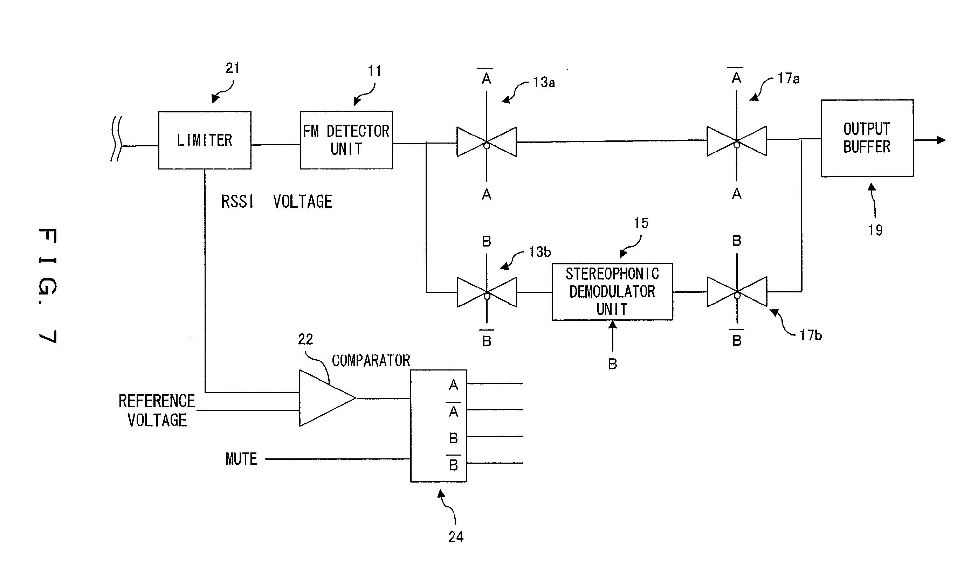

Fig. 7 is a block diagram for showing a second alternative of the FM receiver according to the present embodiment. In this second alternative embodiment, the switch can respond to a MUTE instruction provided by a user.

In Fig. 7, in the FM receiver, information specifying reception strength of the received signal such as, for example, an RSSI voltage, is output by the limiter 21, and the output information is input to one input of the 2-input comparator 22. To the other input of the comparator 22, a reference value (reference voltage) is input, and the above RSSI voltage and the reference voltage are compared by the comparator 22. The comparison result signal SW specifying the comparison result is output by the comparator 22, and is input via one of inputs (terminals) of a 2-input and 4-output selector 24 provided at a later stage than the comparator 22. To the other input (terminal) of the selector 24, a signal (MUTE signal) specifying a MUTE instruction (an instruction not to output audio) provided by a user is input.

The selector 24 receives the above two inputs, generates output signals as below and transfers them to the respective switches and stereophonic demodulator unit.
1. A → L, B → L regardless of the value of the comparison result signal SW, when the MUTE signal is ON (MUTE instruction is provided)
2. A → H, B → L when the MUTE signal is OFF and the comparison result signal SW specifies monophonic
3. A → L, B → H when the MUTE signal is OFF and the comparison result signal SW specifies stereophonic

Hereinafter, respective cases will be explained.

When the MUTE instruction is provided by a user, signals of A → L and B → L are output by the above selector 24. As a result, to the control terminals of the switches 13a and 17a are input the signal A (L) and the inverted signal (H) of the signal A, and the switches 13a and 17a are turned off. Also, to the control terminals of the switches 13b and 17b are input the signal B (L) and the inverted signal (H) of the signal B, and the switches 13b and 17b are turned off. Also, to the stereophonic demodulator unit 15 is input the signal B (L), and the inverted signal (H) of the signal B, and thereby, electric power supply to the stereophonic demodulator unit 15 is cut. As above, when the MUTE instruction is provided, the switches 13b and 17b on the route via the stereo demodulator unit 15 and the switches 13a and 17a on the route bypassing the stereophonic demodulator unit 15 are turned off and also, electric power supply to the stereophonic demodulator unit 15 is turned off.

When the MUTE instruction is not provided and an instruction to switch to a monophonic mode is provided (or automatic switching to a monophonic mode occurs), signals of A → H and B → L are output from the above selector 24. As a result, to the control terminals of the switches 13a and 17a are input the signal A (H) and the inverted signal (L) of the signal A, and the switches 13a and 17a are turned on. Also, to the control terminals of the switches 13b and 17b are input the signal B (L) and the inverted signal (H) of the signal B, and the switches 13b and 17b are turned off. Also, to the stereophonic demodulator unit 15 is input the signal B (L), and the inverted signal (H) of the signal B, and thereby, electric power supply to the stereophonic demodulator unit is cut. As above, when the instruction to switch to a monophonic mode is provided (or automatic switching to a monophonic mode occurs), the switches 13b and 17b on the route via the stereophonic demodulator unit 15 are turned off, and the switches 13a and 17a on the route bypassing the stereophonic demodulator unit 15 are turned on, and also, electric power supply to the stereophonic demodulator unit 15 is turned off.

When the MUTE instruction is not provided and an instruction to switch to a stereophonic mode is provided (or automatic switching to a stereophonic mode occurs), signals of A → L and B → H are output from the above selector 24. As a result, to the control terminals of the switches 13a and 17a are input the signal A (L) and the inverted signal (H) of the signal A, and the switches 13a and 17a are turned off. Also, to the control terminals of the switches 13b and 17b are input the signal B (H) and the inverted signal (L) of the signal B, and the switches 13b and 17b are turned on. Also, to the stereophonic demodulator unit 15 is input the signal B (H), and the inverted signal (L) of the signal B, and thereby, electric power supply is turned on. As above, when the instruction to switch to a stereophonic mode is provided (or automatic switching to a stereophonic mode occurs), the switches 13b and 17b on the route via the stereophonic demodulator unit 15 are turned on, and the switches 13a and 17a on the route bypassing the stereophonic demodulator unit 15 are turned off, and also, electric power supply to the stereophonic demodulator unit 15 is turned on.

Additionally, in Fig. 7, switching between stereophonic and monophonic is automatically conducted based on a determination of the comparator, however, it is needless to mention that even when the switching between stereophonic and monophonic is conducted based on an instruction of a user, the switch can be similarly constituted with an added MUTE function.

Additionally, in the above explanation, the switches are arranged after a branch into a route via the stereophonic demodulator unit and a route bypassing the stereophonic demodulator unit and before a joining point of the above two routes, however, the switch may be arranged either after a branch or before a joining point. However, it is desirable that the switches are arranged at both a point which is after the branch and which is as close to the branch as possible, or a point which is before the joining point and which is as close to the joining point as possible.

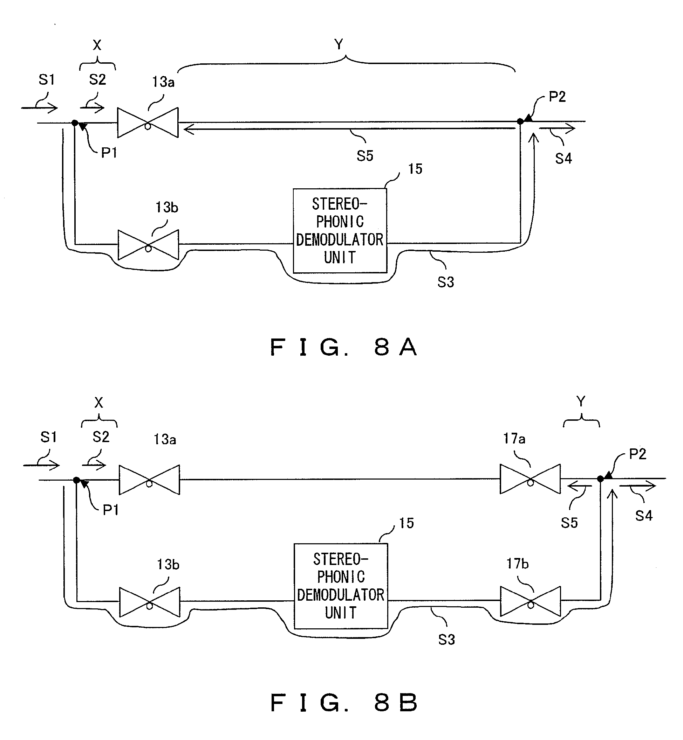

Fig. 8A and Fig. 8B are diagrams for explaining positions at which the switches are arranged. Fig. 8A shows the case where the switches are arranged only at a point close to a branch on the route via the stereophonic demodulator unit and at a point close to the branch on the route bypassing the stereophonic demodulator unit. Fig. 8B shows the case where the switches are arranged at points close to both the branch and the joining point respectively on the above two routes.

In Fig. 8A, a detected signal S1 is branched into a signal S2 and a signal S3 at a branching point P1. In the figure, the case where the route via the stereophonic demodulator unit is selected is assumed, therefore, the signal S3 reaches a joining point P2 via the switch 13b and the stereophonic demodulator unit 15. At the joining point P2, the signal S3 is branched into a signal S4 transmitted to an output buffer provided at a later stage and into a signal S5 propagating along the route for a monophonic signal in the backward direction. The above propagation of the signal S5 in the backward direction along the route for the monophonic direction further causes propagation along the same route in the forward direction because the switch 13a in an off state functions as a barrier, which can be a factor in causing deterioration of the stability of operation of the circuit. Generally, a section over which the signal S2 and signal S5 in the figure propagate i. e., the section denoted by X and the section denoted by Y (section X+Y) are subject to the occurrence of propagation of unnecessary signals as above. Additionally, as is obvious from the above explanation, the length of the section X+Y over which the above unnecessary signal propagates basically does not change in the case where a switch is arranged at one point on each route.

Meanwhile, when the switches 13a, 13b, 17a and 17b are respectively arranged after the branching point P1 and before the joining point P2, the detected signal S1 is branched into the signal S2 and the signal S3 at the branching point P1. The signal S3 reaches the joining point P2 via the switch 13b, the stereophonic demodulator unit 15 and the switch 17b. At the joining point P2, the signal S3 is branched into the signal S4 transmitted to the output buffer provided at a later stage, and into the signal S5 which propagates along the route for the monophonic signal in the backward direction. The sum X+Y of sections over which unnecessary signals propagate in the circuit is greatly reduced compared to the configuration shown in Fig. 8A, and the above factor deteriorating the stability of the operation of the circuit, is reduced in proportion to the amount the above sum is reduced. Additionally, in this regard, it is desirable that the positions after the branch at which the switches 13a and 13b are arranged are as close to the branch as possible, as long as necessary requirements regarding design are satisfied. Additionally, it is desirable that the positions before the joining point at which the switches 17a and 17b are arranged are as close to the joining point as possible, as long as necessary requirements regarding design are satisfied.

Additionally, in the FM receiver according to the present embodiment, routes are selected between the case of outputting monophonic audio and the case of outputting stereophonic audio, accordingly, deterioration in signals when the monophonic output is desired is reduced so that audio quality can be improved compared to the case where the monophonic audio and the stereophonic audio are output via the same route, i.e., as in the case of the conventional example without the route selection. This is because the stereophonic demodulator unit is bypassed upon the monophonic output and thereby deterioration in signals that occurs when the signals are transmitted through the stereophonic demodulator unit is suppressed.

### Applicability to industries

The present invention can be applied to an FM receiver in which switching between stereophonic and monophonic can be conducted.

## Claims

1. An FM receiver which can be used by being switched between stereophonic and monophonic, comprising:
detecting unit for detecting a received signal;
two routes over which a detected signal is transmitted to an output buffer;
switching unit for selecting either one of the two routes, wherein:
the two routes comprise a route via a stereophonic demodulator unit and a route bypassing the stereophonic demodulator unit; and
the switching unit selects either one of the two routes based on a control signal indicating the selection of either one of the stereophonic and the monophonic, and turns off electric power supply to the stereophonic demodulator unit based on the control signal when the route bypassing the stereophonic demodulator unit is selected.

2. The FM receiver according to claim 1, wherein:
the switching unit switches in accordance with an external switching instruction provided by a user.

3. The FM receiver according to claim 1, further comprising:
comparison unit for comparing a strength of the received signal with a reference value, wherein:
the switching unit selects the route via the stereophonic demodulator unit when the received signal is higher than the reference value, and/or selects the route bypassing the stereophonic demodulator unit when the received signal is equal to or lower than the reference value, based on an output signal of the comparison unit.

4. The FM receiver according to claim 2 or 3, wherein:
the stereophonic demodulator unit turns off electric power supply to the stereophonic demodulator unit when the route via the stereophonic demodulator unit is selected based on the switching instruction provided by the user or the output signal of the comparison unit.

5. The FM receiver according to claim 4, wherein:
the stereophonic demodulator unit comprises a circuit portion related to electric supply that can turn off one of a transistors forming a differential pair with an upstream transistor constituting multiple stages when a signal causing the upstream transistor constituting multiple stages to be turned on is provided to the upstream transistor; and
electric power supply to the stereophonic demodulator unit is turned off by turning on the upstream transistor of the circuit portion by the control signal.

6. The FM receiver according to claim 1, wherein:
the switching unit are arranged at points which are after a branch of the route via the stereophonic demodulator unit and the route bypassing the stereophonic demodulator unit and which are close to the branch, and also arranged at points which are before a joining point of the route via the stereophonic demodulator unit and the route bypassing the stereophonic demodulator unit and which are close to the joining point.

7. The FM receiver according to claim 1, wherein:
it is further possible to turn off both the route via the stereophonic demodulator unit and the route bypassing the stereophonic demodulator unit in the switching by the switching unit.
